# EUROPEAN PATENT SPECIFICATION

(11) **EP 2 571 196 B1**
(45) Date of publication and mention of the grant of the patent: **25.02.2015**
(21) Application number: 11847445.1
(22) Date of filing: 01.12.2011
(51) Int. Cl.: H04L 12/24, H04W 24/02, G06F 9/44, G06F 9/445, H04W 84/04

(54) **METHOD AND DEVICE FOR UPGRADING RADIO RELAY EQUIPMENT**
VERFAHREN UND VORRICHTUNG ZUR AKTUALISIERUNG EINER FUNKRELAIS-AUSRÜSTUNG
PROCÉDÉ ET DISPOSITIF POUR LA MISE À NIVEAU D'ÉQUIPEMENTS DE RELAIS RADIO

(30) Priority: 06.12.2010 CN 201010574548
(43) Date of publication of application: 20.03.2013
(73) Proprietor: Huawei Device Co., Ltd., Shenzhen, Guangdong 518129 (CN)
(72) Inventor: WANG, Weihong, Shenzhen Guangdong 518129 (CN); HUA, Jin, Shenzhen Guangdong 518129 (CN)
(74) Representative: Kreuz, Georg Maria
(86) International application number: PCT/CN2011/083274
(87) International publication number: WO 2012/075903

(56) References cited:
- WO-A1-2010/031304
- CN-A- 101 252 458
- CN-A- 101 286 867
- CN-A- 101 873 726
- CN-A- 101 873 726
- CN-A- 102 143 508
- DE-A1-102004 047 361
- US-A1- 2002 093 943
- US-B1- 6 571 284

## Description

### FIELD OF THE INVENTION

The present invention relates to the field of communications, and in particular, to a method and an apparatus for upgrading a wireless repeater.

### BACKGROUND OF THE INVENTION

With the development of a home broadband service, a wireless access terminal, such as a home gateway and an AP (Access points, access points), has been deployed rapidly in a home area network. However, due to factors such as layout of a room and thickness of a wall, the coverage range of wireless signals is not very satisfactory. However, wireless signals may be extended by establishing a home wireless network by using wireless relay technologies, so as to solve the problem of wireless coverage.

In a current home area network, when a version of a wireless repeater needs to be upgraded, a version upgrade is usually performed separately on each wireless repeater. For example, if versions of three wireless repeaters in a home area network need to be upgraded, the operation need to be performed three times to complete an upgrade, thereby resulting in low upgrade efficiency and a high operation and maintenance cost.
US6571284 discloses a method and a system for repeater management. In order to integrate repeater management with network management in a wireless telecommunication network, a database is added to the network management center (NMC), said database including the data on the network repeaters (R **1**, R **2**, R **3**), which include for each repeater (R **1**, R **2**, R **3**) at least the identifier of the base station (BTS) corresponding to the repeater concerned; a repeater plan is made for changing repeater parameters to correspond to the changed configuration of the base stations; and each repeater is sent an update message (B **1**, B **2**, B **3**) containing parameters for the reconfiguring of the repeater (R **1**, R **2**, R **3**) to correspond to the repeater plan.
EP2330774 discloses a method for upgrading a device through multicast is disclosed. The method includes: monitoring a common channel of a multicast server, where information about all subfiles of a current packaged mirror file is multicast in the common channel; obtaining information about a subfile required for upgrading the device from packets in the common channel, where the information includes an address of a subchannel that bears the subfile on the multicast server; and switching to the subchannel according to the address of the subchannel that bears the subfile required for upgrade, receiving the subfile multicast in the subchannel, and validating the subfile.

### SUMMARY OF THE INVENTION

The present invention provides a method and an apparatus for upgrading a wireless repeater, so as to solve the technical problem of low upgrade efficiency and a high operation and maintenance cost of the wireless repeater in a current home area network.

The objective of the present invention is achieved by the following technical provisions:

According to the first aspect of the present invention a method for upgrading a wireless repeater is provided, which is applied in the wireless repeater. The method includes: establishing a wireless connection with a wireless access device, where the wireless access device is connected to a multicast server; detecting in real time whether a packet of a version upgrade file is received at a predefined multicast IP address that is sent by the multicast server through the wireless access device; if the packet of the version upgrade file is detected, receiving the packet of the version upgrade file in real time; and integrating the packet of the version upgrade file received in real time into a version upgrade file and performing an upgrade operation according to the version upgrade file. Wherein the step of establishing the wireless connection with the wireless access device includes: setting a service set identifier SSID used for a multicast upgrade, wherein the SSID is the same as an SSID of the wireless access device; and after the wireless repeater is powered on, automatically connecting to the wireless access device through the SSID.

According to the second aspect of the present invention a wireless repeater is provided, which is applied in a home area network. The wireless repeater includes: a connection unit, configured to establish a wireless connection with a wireless access device, where the wireless access device is connected to a multicast server; a detection unit, configured to detect in real time whether a packet of a version upgrade file is received at a predefined multicast IP address that is sent by the multicast server through the wireless access device; a receiving unit, configured to: when the packet of the version upgrade file is detected, receive the packet of the version upgrade file in real time ; and an upgrade unit, configured to integrate the packet of the version upgrade file received in real time into a version upgrade file and perform an upgrade operation according to the version upgrade file. Wherein the connection unit comprises: a setting module, configured to set a service set identifier SSID used for a multicast upgrade, wherein the SSID is the same as an SSID of the wireless access device; and a first connection module, configured to be automatically connected to the wireless access device through the SSID, after the wireless repeater is powered on.

According to a third aspect a system for upgrading a wireless repeater is provided, where the system includes: a multicast server, configured to send a packet of a version upgrade file to a predefined multicast IP address cyclically at a preset time interval; at least one wireless repeater, configured to set a service set identifier SSID used for a multicast upgrade, wherein the SSID is the same as an SSID of a wireless access device (73), automatically connect to the wireless access device through the SSID after being powered on, detect in real time whether the packets are received at the predefined multicast IP address, and after detecting the packets, receive the packets in real time, integrate the packets received in real time into a version upgrade file, and perform an upgrade operation according to the version upgrade file; the wireless access device, connected to the multicast server through Ethernet or in a wireless manner, and connected to each wireless repeater in a wireless manner.

Through the method and the apparatus provided by the present invention, because the wireless repeater detects whether a packet of a version upgrade file is received at a predefined multicast IP address that is sent by the multicast server through the wireless access device, when upgrade packages are available, all wireless repeaters may be upgraded. Compared with the prior art, the versions of the wireless repeaters do not need to be upgraded one by one in the present invention, thereby improving the upgrade efficiency and reducing the maintenance cost.

### BRIEF DESCRIPTION OF THE DRAWINGS

To illustrate the technical solutions of the present invention more clearly, the accompanying drawings describing embodiments of the present invention are introduced below briefly. Apparently, the accompanying drawings in the following descriptions merely show only some embodiments of the present invention.
FIG. 1 is a schematic networking diagram of a method for upgrading a wireless repeater according to an embodiment of the present invention;
FIG. 2 is a flowchart of a method for upgrading a wireless repeater according to an embodiment of the present invention;
FIG. 3 is a flowchart of a method for upgrading a wireless repeater according to another embodiment of the present invention;
FIG. 4 is an upgrade process of a wireless repeater according to an embodiment of the present invention;
FIG. 5 is a constitutional block diagram of a wireless repeater according to an embodiment of the present invention;
FIG. 6 is a constitutional block diagram of a multicast server according to an embodiment of the present invention; and
FIG. 7 is a block diagram of a system for upgrading a wireless repeater according to an embodiment of the present invention.

### DETAILED DESCRIPTION OF THE EMBODIMENTS

The technical solutions of the embodiments of the present invention are hereinafter described clearly and completely with reference to the accompanying drawings in the embodiments of the present invention. Evidently, described are only some exemplary embodiments of the present invention, rather than all embodiments of the present invention.

It should be obvious that the described embodiments are a part rather than all of the embodiments of the present invention.

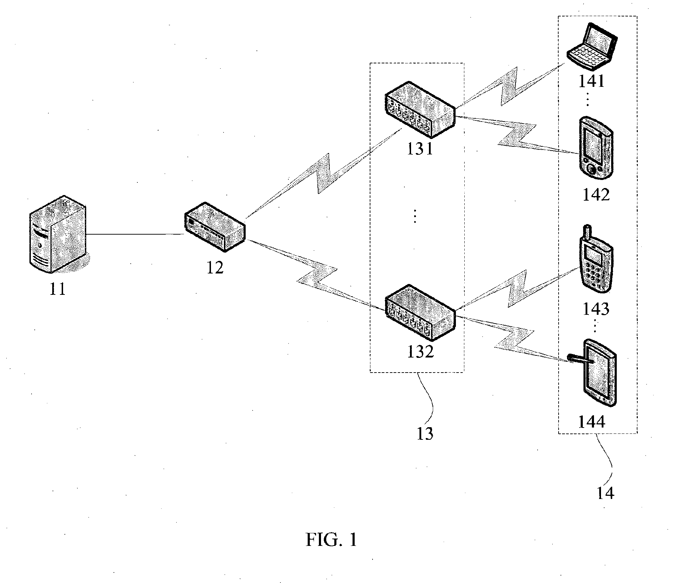

FIG. 1 is a schematic networking diagram of a method for upgrading a wireless repeater according to an embodiment of the present invention. Referring to FIG. 1, a home area network includes a multicast server 11, a wireless access device 12, multiple wireless repeaters 13, and multiple wireless terminals 14. This embodiment is described with an example of two wireless repeaters 131 and 132 and four wireless terminals 141, 142, 143, and 144.

The multicast server 11 is connected to the wireless access device 12 through Ethernet or in a wireless manner and transmits data to the wireless repeater 13 through the wireless access device 12; the wireless access device 12 is connected to the wireless repeater 13 in a wireless manner, where a connection may be established automatically or manually; and the wireless repeater 13 is connected to the wireless terminal 14 in a wireless manner, so as to provide a wireless online service to the wireless terminal 14.

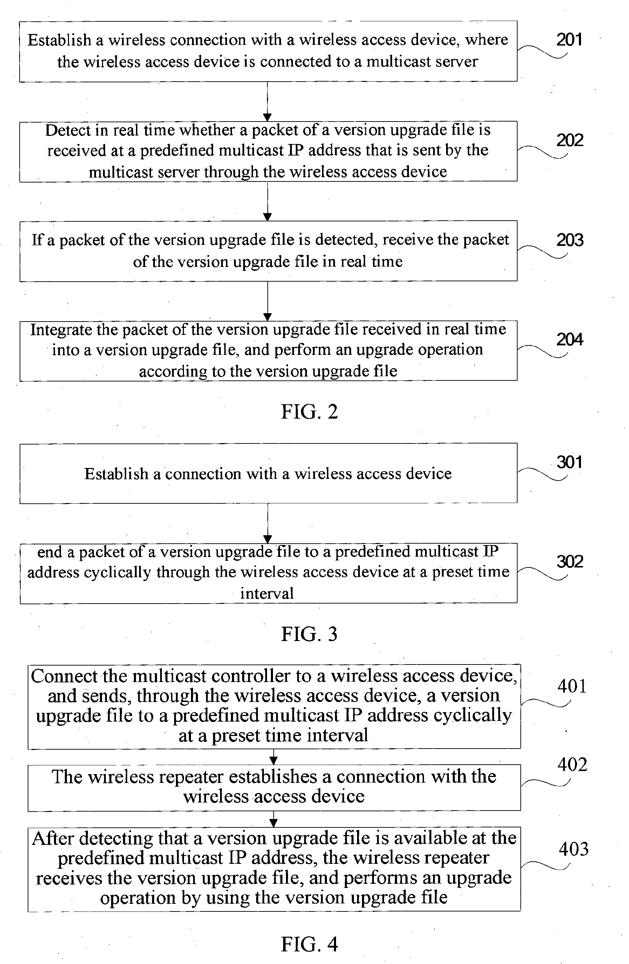

FIG. 2 is a flowchart of a method for upgrading a wireless repeater according to an embodiment of the present invention. The method is applied in the wireless repeater. Referring to FIG. 2, the method includes:

Step 201: Establish a wireless connection with a wireless access device, where the wireless access device is connected to a multicast server.

A service set identifier SSID (Service Set Identifier) used for a multicast upgrade may be first set in the wireless repeater, and an SSID of the wireless access device may be set to be the same as the SSID of the wireless repeater. In this manner, after being powered on, the wireless repeater may be automatically connected to the wireless access device through the SSID.

The connection may also be established manually, that is, the wireless repeater is connected to the wireless access device through a user's manual operation. In this case, the wireless repeater in this embodiment obtains a connection instruction input by the user and establishes, according to the connection instruction, a wireless connection with the wireless access device. In this embodiment, the SSID of the wireless access device may be set to any value according to related standards and may be modified.

The wireless access device is also connected to the multicast server and configured to forward all kinds of data transmitted by the multicast server, and details are not described here again.

Step 202: Detect in real time whether a packet of a version upgrade file is received at a predefined multicast IP address that is sent by the multicast server through the wireless access device.

In this embodiment, the wireless access device may be connected to multiple wireless repeaters in a wireless manner. Therefore, each wireless repeater may perform step 202.

It may be determined, by detecting the predefined multicast IP address, whether the packet of the version upgrade file is received at the predefined multicast IP address. In this embodiment, the version file is divided into packets, and the packets are sent one by one cyclically by the multicast server. Therefore, real-time detection is needed in this embodiment.

Step 203: If a packet of the version upgrade file is detected, receive the packet of the version upgrade file in real time.

If the packet of the version upgrade file is detected, the wireless repeater in this embodiment receives the packet of the version upgrade file in real time, so that a whole version upgrade file may be obtained.

Step 204: Integrate the packet of the version upgrade file received in real time into a version upgrade file, and perform an upgrade operation according to the version upgrade file.

In one embodiment, the wireless repeater may directly perform an upgrade operation according to the version upgrade file; in another embodiment, the wireless repeater may compare the version of the version upgrade file with the version of the wireless repeater, and perform an upgrade operation when the version of the version upgrade file is higher than the version of the wireless repeater. The foregoing descriptions are merely examples, and this embodiment is not limited thereto.

After the packet of the version upgrade file is received one by one, the wireless repeater in this embodiment integrates the packets into a whole version upgrade file and performs an upgrade operation by using the version upgrade file.

The packet of the version upgrade file delivered by the multicast server carries an identifier, so that a location of each packet in the whole version upgrade file may be determined, that is, which part of the version upgrade file is formed by each packet may be determined. The wireless repeater in this embodiment may integrate received packets into a whole version upgrade file according to the identifier. The foregoing description is just an example, and an actual implementation is not limited to the manner of carrying an identifier.

Because the version upgrade file has an installation program, an upgrade operation may be implemented by executing the version upgrade file, and details are not described here again.

In an embodiment, for the convenience of a user in determining completion of an upgrade, a process and completion status of the upgrade may be further displayed in this embodiment, when the wireless repeater performs the upgrade operation according to the version upgrade file. The upgrade process and upgrade result may be indicated by using an indicator emitting lights of different colors, and/or blinking, and/or blinking at different frequencies, or the upgrade process and upgrade result may be displayed through a display bar, and this embodiment is not limited thereto.

Through the method for upgrading a wireless repeater in this embodiment, because each wireless repeater among the multiple wireless repeaters may perform steps 202 to 204 separately the upgrade of the multiple wireless repeaters may be implemented through the foregoing steps. It may also be understood that a lot upgrade is performed, in a centralized way, on multiple wireless repeaters in the present invention by using a multicast manner, that is, the wireless repeater detects whether a packet of the version upgrade file is received at a predefined multicast IP address, and each wireless repeater may perform the upgrade operation when the upgrade packages are available. Compared with the prior art, a version upgrade does not need to be performed on the wireless repeaters one by one according to the embodiment of the present invention, thereby improving the upgrade efficiency and reducing the maintenance cost. Furthermore, the lot upgrade may be performed on multiple wireless repeaters in a centralized way. By setting a predefined SSID used for the multicast upgrade on the wireless repeater, an automatic upgrade may be implemented, so that the upgrade operation gets easier and more convenient. By displaying the upgrade process and completion status, a user may conveniently determine the upgrade situation of the wireless repeater.

FIG. 3 is a flowchart of a method for upgrading a wireless repeater provided in an embodiment of the present invention. Corresponding to the method of the embodiment shown in FIG. 2, the method is applied in a multicast server. Referring to FIG. 3, the method includes:

Step 301: Establish a connection with a wireless access device.

A multicast controller in this embodiment may be connected to a wireless access device through Ethernet or a wireless connection.

Step 302: Send a packet of a version upgrade file to a predefined multicast IP address cyclically through the wireless access device at a preset time interval, so that after the wireless repeater detects in real time that the packets are received at the predefined multicast IP address, receive the packets in real time, integrate the packets received in real time into a version upgrade file, and perform an upgrade operation according to the version upgrade file.

The multicast controller in this embodiment sends, according to the foregoing steps, the packet of the version upgrade file to the predefined multicast IP address cyclically, so that multiple wireless repeaters detect in real time whether the packet of the version upgrade file is received at the predefined multicast IP address that is sent by the multicast server through the wireless access device. When the upgrade packages are detected, a lot upgrade may be implemented on the wireless repeaters, thereby improving the upgrade efficiency and reducing the maintenance cost. The predefined multicast IP address may be changed, and this embodiment is not intended to limit the predefined multicast IP address to a specific value.

To make the method of embodiments shown in FIG. 2 and FIG. 3 clearer and more comprehensible, a method for upgrading a wireless repeater in this embodiment is described in detail with reference to a process shown in FIG. 4 by taking an example where the predefined multicast IP address is 224.0.0.119, the preset time interval is 10 ms, and the version upgrade file is V100R001B020.binReferring to FIG. 4, the process includes:

Step 401: Connect the multicast controller to a wireless access device, and sends, through the wireless access device, a version upgrade file to a predefined multicast IP address cyclically at a preset time interval.

In this embodiment, the predefined multicast IP address is 224.0.0.119, the preset time interval is 10 ms, and the version upgrade file is V100R001B020.bin. After establishing a connection with the wireless access device, according to the method of the embodiment shown in FIG. 3, the multicast controller in this embodiment sends the version upgrade file V100R001B020.bin to the destination IP address 224.0.0.119 through UDP (User Datagram Protocol) packets, where the version upgrade file is divided into several packets, and the packet are sent at an interval of 10 ms, so as to cyclically send the version upgrade file V100R001B020.bin.

Step 402: The wireless repeater establishes a connection with the wireless access device.

In this embodiment, when the wireless repeater is configured in a factory, an SSID used for a multicast upgrade is defined in default, for example, Repeater_Mutilcast_Upgrade. In this embodiment, the SSID of the wireless access device is set to an SSID that is the same as the default SSID used for the multicast upgrade on the wireless repeater. Because the SSID is configured in the factory, the SSID may be used for the multicast upgrade only, and cannot be deleted and modified.

According to the method of the embodiment shown in FIG. 2, after being powered on, the wireless repeater in this embodiment is automatically connected to the wireless access device by using the foregoing SSID used for the multicast upgrade. In this embodiment, if the connection according to foregoing method fails, an SSID configured by a user is used to connect an AP, that is, the wireless repeater in this embodiment is connected to the wireless access device through a user's operation.

Step 403: After detecting that a version upgrade file is available at the predefined multicast IP address, the wireless repeater receives the version upgrade file, and performs an upgrade operation by using the version upgrade file.

After the wireless repeater in this embodiment is connected to the wireless access device, according to the method of the embodiment shown in FIG. 2, the wireless repeater detects whether a version upgrade file is received at the foregoing predefined multicast IP address 224.0.0.119; after detecting the version upgrade file, the wireless repeater receives a packet of a corresponding version upgrade file, and an upgrade operation is performed on the wireless repeater.

Through the method for upgrading a wireless repeater in this embodiment, a lot upgrade of home wireless local area network devices may be implemented, thereby improving the upgrade efficiency and reducing the maintenance cost.

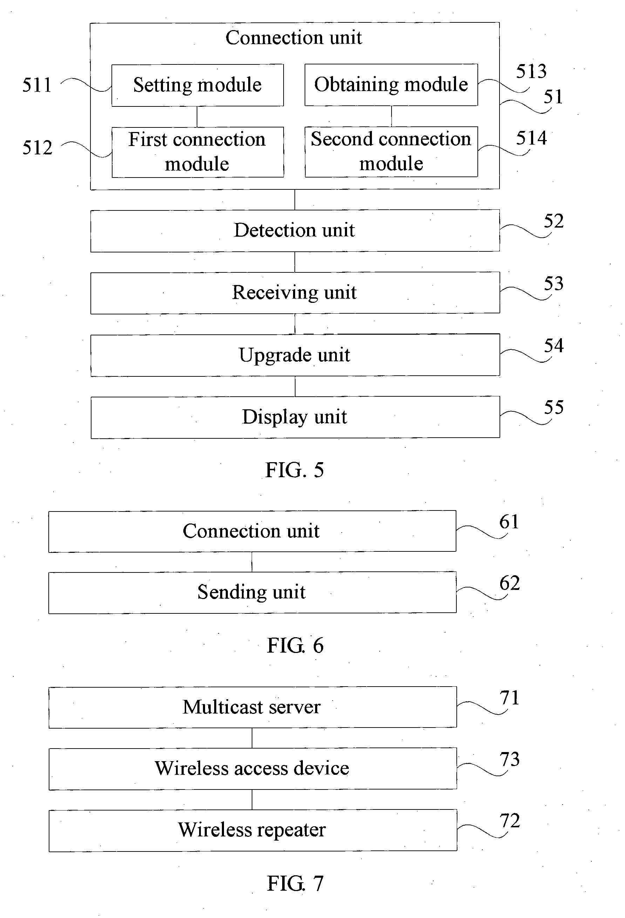

FIG. 5 is a constitutional block diagram of a wireless repeater provided in an embodiment of the present invention. The wireless repeater is applied in a home area network. Referring to FIG. 5, the wireless repeater includes:
a connection unit 51, configured to establish a wireless connection with a wireless access device, where the wireless access device is connected to a multicast server;
a detection unit 52, configured to detect in real time whether a packet of a version upgrade file is received at a predefined multicast IP address that is sent by the multicast server through the wireless access device;
a receiving unit 53, configured to receive the packet of the version upgrade file in real time, when the packet of the version upgrade file is detected; and
an upgrade unit 54, configured to integrate the packet of the version upgrade file received in real time into a version upgrade file and perform an upgrade operation according to the version upgrade file.

In an embodiment, the connection unit 51 includes:
a setting module 511, configured to set a service set identifier SSID used for multicast upgrade, where the SSID is the same as an SSID of the wireless access device; and
a first connection module 512, configured to be connected to the wireless access device through the SSID, after the wireless repeater is powered on.

In another embodiment, the connection unit 51 includes:
an obtaining module 513, configured to obtain a connection instruction; and
a second connection module 514, configured to establish, according to the connection instruction, a wireless connection with the wireless access device.

In an embodiment, the wireless repeater further includes:
a display unit 55, configured to display a process of an upgrade operation and a result of the upgrade operation, when the upgrade unit 54 performs the upgrade operation according to the version upgrade file.

In this embodiment, the wireless access device may a home gateway, an AP, or other devices supporting a wireless connection function.

Each component of the wireless repeater in this embodiment is configured to implement each step of the method of the embodiment shown in FIG. 2 respectively. Because each step is described in detail in the embodiment shown in FIG. 2, details are not described here again.

With the wireless repeaters provided in the embodiment of the present invention, a lot upgrade may be implemented, thereby improving the upgrade efficiency and reducing the maintenance cost.

FIG. 6 is a constitutional block diagram of a multicast controller according to an embodiment of the present invention. The multicast controller is also applied in a home area network. Referring to FIG. 6, the multicast controller includes:
a connection unit 61, configured to establish a connection with a wireless access device;
   and
a sending unit 62, configured to send, through the wireless access device, a packet of a version upgrade file to a predefined multicast IP address cyclically at a preset time interval, so that after detecting in real time that the packets are received at the predefined multicast IP address, the wireless repeater receives the packets in real time, integrates the packets received in real time into a version upgrade file, and performs an upgrade operation according to the version upgrade file.

In this embodiment, the wireless access device may a home gateway, an AP, or other devices supporting a wireless connection function.

Each component of the wireless repeater in this embodiment is configured to implement each step of the method of the embodiment shown in FIG. 3 respectively. Because each step is described in detail in the embodiment shown in FIG. 3, details are not described here again.

Through the multicast controller provided in the embodiment of the present invention, a lot upgrade may be implemented on the wireless repeaters, thereby improving the upgrade efficiency and reducing the maintenance cost.

FIG. 7 is a constitutional block diagram of a system for upgrading a wireless repeater according to an embodiment of the present invention. The system for upgrading a wireless repeater is also applied in a home area network. Referring to FIG. 7, the system includes:
a multicast server 71, configured to send a packet of a version upgrade file to a predefined multicast IP address cyclically at a preset time interval;
at least one wireless repeater 72, configured to detect in real time whether the packets are received at the predefined multicast IP address, and after detecting the packets, receive the packets in real time, integrate the packets received in real time into a version upgrade file, and perform an upgrade operation according to the version upgrade file; and
a wireless access device 73, connected to the multicast server through Ethernet or in a wireless manner, and connected to each wireless repeater in a wireless manner.

In this embodiment, the multicast server 71 may be implemented by the multicast server shown in FIG. 6, and the wireless repeater 72 may be implemented by the wireless repeater shown in FIG. 5. Because the wireless repeater and the multicast server are described in detail in the embodiments shown in FIG. 5 and FIG. 6, details are not described here again.

In this embodiment, the wireless access device 73 may be a home gateway, an AP, or other devices supporting a wireless connection function.

Through the system for upgrading a wireless repeater in this embodiment, because each wireless repeater among multiple wireless repeaters detects whether a packet of a version upgrade file is received at a predefined multicast IP address that is sent by the multicast server through the wireless access device, when the upgrade packages are available, an upgrade operation may be performed on each wireless repeater. Compared with the prior art, the version upgrade does not need to be performed on the wireless repeaters one by one in the embodiment of the present invention, thereby improving the upgrade efficiency and reducing the maintenance cost. By setting a predefined SSID used for the multicast upgrade on the wireless repeater, an automatic upgrade may be implemented, so that the upgrade operation gets easier and more convenient. By displaying the upgrade process and completion status, it is easy for a user to determine the upgrade situation of the wireless repeater.

The sequence numbers of the preceding embodiments of the present invention are merely for a description purpose but do not indicate the preference of the embodiments.

Persons skilled in the art may understand clearly that the embodiments of the present invention may be implemented through software and an essential universal hardware platform. Base on the above understanding, the essence of the technical solutions in the embodiments of the present invention or the part that makes contribution to the prior art may be substantially embodied in the form of a software product. The computer software product may be stored in a storage medium such as an ROM/RAM, a magnetic disk, or an optical disk, and include several instructions to instruct a computer apparatus (for example, a personal computer, a server, or a network apparatus) to perform the methods described in the embodiments of the present invention or in some parts of the embodiments of the present invention.

The foregoing embodiments are not intended to limit the present invention.

## Claims

1. A method for upgrading a wireless repeater, wherein the method is applied in the wireless repeater, comprising:
establishing (201) a wireless connection with a wireless access device, wherein the wireless access device is connected to a multicast server;
detecting (202) in real time whether a packet of a version upgrade file is received at a predefined multicast IP address that is sent by the multicast server through the wireless access device;
if the packet of the version upgrade file is detected, receiving (203) the packet of the version upgrade file in real time; and
integrating (204) the packet of the version upgrade file that is received in real time into a version upgrade file and performing an upgrade operation according to the version upgrade file;
wherein the step of establishing (201) the wireless connection with the wireless access device comprises:
setting a service set identifier SSID used for a multicast upgrade, wherein the SSID is the same as an SSID of the wireless access device; and
after the wireless repeater is powered on, automatically connecting to the wireless access device through the SSID.

2. The method according to claim 1, wherein when an upgrade operation is performed according to the version upgrade file, the method further comprises:
displaying a process of the upgrade operation and a result of the upgrade operation.

3. A wireless repeater, applied in a home area network, comprising:
a connection unit (51), configured to establish a wireless connection with a wireless access device, wherein the wireless access device is connected to a multicast server;
a detection unit (52), configured to detect in real time whether a packet of a version upgrade file is received at a predefined multicast IP address that is sent by the multicast server through the wireless access device;
a receiving unit (53), configured to receive the packet of the version upgrade file in real time, when the packet of the version upgrade file is detected; and
an upgrade unit (54), configured to integrate the packet of the version upgrade file received in real time into a version upgrade file and perform an upgrade operation according to the version upgrade file;
wherein the connection unit (51) comprises:
a setting module (511), configured to set a service set identifier SSID used for a multicast upgrade, wherein the SSID is the same as an SSID of the wireless access device; and
a first connection module (512), configured to be automatically connected to the wireless access device through the SSID, after the wireless repeater is powered on.

4. The wireless repeater according to claim 3, further comprising:
a display unit (55), configured to display a process of an upgrade operation and a result of the upgrade operation, when the upgrade unit performs the upgrade operation according to the version upgrade file.

5. A system for upgrading a wireless repeater, comprising:
a multicast server (71), configured to send a packet of a version upgrade file to a predefined multicast IP address cyclically at a preset time interval;
at least one wireless repeater (72), configured to set a service set identifier SSID used for a multicast upgrade, wherein the SSID is the same as an SSID of a wireless access device(73), automatically connect to the wireless access device through the SSID after being powered on, detect in real time whether the packets are received at the predefined multicast IP address, and after detecting the packets, receive the packets in real time, integrate the packets received in real time into a version upgrade file, and perform an upgrade operation according to the version upgrade file; and
the wireless access device (73), connected to the multicast server through Ethernet or in a wireless manner, and connected to each wireless repeater in a wireless manner.

## Patentansprüche

1. Verfahren zum Nachrüsten eines drahtlosen Repeaters, wobei das Verfahren im drahtlosen Repeater angewendet wird, das die folgenden Schritte aufweist:
Herstellen (201) einer drahtlosen Verbindung mit einer drahtlosen Zugangsvorrichtung, wobei die drahtlose Zugangsvorrichtung mit einem Multicast-Server verbunden ist;
Ermitteln (202) in Echtzeit, ob ein Paket einer Versionsnachrüstungsdatei auf einer vordefinierten Multicast-IP-Adresse empfangen wird, die durch den Multicast-Server durch die drahtlose Zugangsvorrichtung gesendet wird;
wenn das Paket der Versionsnachrüstungsdatei ermittelt wird, Empfangen (203) des Pakets der Versionsnachrüstungsdatei in Echtzeit; und
Integrieren (204) des in Echtzeit empfangenen Pakets der Versionsnachrüstungsdatei in eine Versionsnachrüstungsdatei und Durchführen einer Nachrüstungsoperation gemäß der Versionsnachrüstungsdatei;
wobei der Schritt des Herstellens (201) der drahtlosen Verbindung mit der drahtlosen Zugangsvorrichtung aufweist:
Einstellen eines "Service Set Identifier", SSID, der für eine Multicast-Nachrüstung verwendet wird, wobei der SSID derselbe wie ein SSID der drahtlosen Zugangsvorrichtung ist; und
nachdem der drahtlose Repeater eingeschaltet wird, automatisches Verbinden mit der drahtlosen Zugangsvorrichtung durch den SSID.

2. Verfahren nach Anspruch 1, wobei, wenn eine Nachrüstungsoperation gemäß der Versionsnachrüstungsdatei durchgeführt wird, das Verfahren ferner aufweist:
Anzeigen eines Prozesses der Nachrüstungsoperation und eines Resultats der Nachrüstungsoperation.

3. Drahtloser Repeater, der in einem Heimnetzwerk angewendet wird, der Folgendes aufweist:
eine Verbindungseinheit (51), die konfiguriert ist, eine drahtlose Verbindung mit einer drahtlosen Zugangsvorrichtung herzustellen, wobei die drahtlose Zugangsvorrichtung mit einem Multicast-Server verbunden ist;
eine Ermittlungseinheit (52), die konfiguriert ist, in Echtzeit zu ermitteln, ob ein Paket einer Versionsnachrüstungsdatei auf einer vordefinierten Multicast-IP-Adresse empfangen wird, die durch den Multicast-Server durch die drahtlose Zugangsvorrichtung gesendet wird;
eine Empfangseinheit (53), die konfiguriert ist, das Paket der Versionsnachrüstungsdatei in Echtzeit zu empfangen, wenn das Paket der Versionsnachrüstungsdatei ermittelt wird; und
eine Nachrüstungseinheit (54), die konfiguriert ist, das in Echtzeit empfangene Paket der Versionsnachrüstungsdatei in eine Versionsnachrüstungsdatei zu integrieren und
eine Nachrüstungsoperation gemäß der Versionsnachrüstungsdatei durchzuführen;
wobei die Verbindungseinheit (51) aufweist:
ein Einstellmodul (511), das konfiguriert ist, einen "Service Set Identifier", SSID, einzustellen, der für eine Multicast-Nachrüstung verwendet wird, wobei der SSID derselbe wie ein SSID der drahtlosen Zugangsvorrichtung ist; und
ein erstes Verbindungsmodul (512), das konfiguriert ist, automatisch mit der drahtlosen Zugangsvorrichtung durch den SSID verbunden zu werden, nachdem der drahtlose Repeater eingeschaltet wird.

4. Drahtloser Repeater nach Anspruch 3, der ferner aufweist:
eine Anzeigeeinheit (55), die konfiguriert ist, einen Prozess einer Nachrüstungsoperation und ein Resultat der Nachrüstungsoperation anzuzeigen, wenn die Nachrüstungseinheit die Nachrüstungsoperation gemäß der Versionsnachrüstungsdatei durchführt.

5. System zur Nachrüstung eines drahtlosen Repeaters, das Folgendes aufweist:
einen Multicast-Server (71), der konfiguriert ist, zyklisch in einem voreingestellten Zeitintervall ein Paket einer Versionsnachrüstungsdatei an eine vordefinierte Multicast-IP-Adresse zu senden;
mindestens einen drahtlosen Repeater (72), der konfiguriert ist, einen "Service Set Identifier", SSID, einzustellen, der für eine Multicast-Nachrüstung verwendet wird,
wobei der SSID derselbe wie ein SSID einer drahtlosen Zugangsvorrichtung (73) ist,
sich automatisch mit der drahtlosen Zugangsvorrichtung durch den SSID zu verbinden, nachdem er eingeschaltet wird, in Echtzeit zu ermitteln, ob die Pakete an der vordefinierten Multicast-IP-Adresse empfangen werden, und nach dem Ermitteln der Pakete die Pakete in Echtzeit zu empfangen, die in Echtzeit empfangenen Pakete in eine Versionsnachrüstungsdatei zu integrieren, und eine Nachrüstungsoperation gemäß der Versionsnachrüstungsdatei durchzuführen; und
die drahtlose Zugangsvorrichtung (73), die mit dem Multicast-Server durch Ethernet oder in einer drahtlosen Weise verbunden ist, und mit jedem drahtlosen Repeater in einer drahtlosen Weise verbunden ist.

## Revendications

1. Procédé de mise à jour d'un répéteur sans fil, dans lequel le procédé est appliqué au répéteur sans fil et comprend :
l'établissement (201) d'une connexion sans fil grâce à un dispositif d'accès sans fil,
dans lequel le dispositif d'accès sans fil est connecté à un serveur de multidiffusion,
la détection (202) en temps réel de ce qu'un paquet, appartenant à un fichier de mise à jour de version, est reçu au niveau d'une adresse au protocole IP prédéfinie de multidiffusion, lequel est envoyé par le serveur de multidiffusion, par l'intermédiaire du dispositif d'accès sans fil,
la réception (203) en temps réel, si le paquet du fichier de mise à jour de version est détecté, du paquet du fichier de mise à jour de version, et
l'intégration (204) du paquet du fichier de mise à jour de version qui est reçu en temps réel dans un fichier de mise à jour de version et l'exécution d'une opération de mise à jour en fonction du fichier de mise à jour de version,
dans lequel l'étape d'établissement (201) de la connexion sans fil grâce au dispositif d'accès sans fil comprend :
l'établissement d'un identificateur d'ensemble de services SSID utilisé pour une mise à jour par multidiffusion, l'identificateur SSID étant identique à un identificateur SSID du dispositif d'accès sans fil, et
après que le répéteur sans fil est mis sous tension, la connexion automatique au dispositif d'accès sans fil par l'intermédiaire de l'identificateur SSID.

2. Procédé selon la revendication 1, dans lequel, lorsqu'une opération de mise à jour est exécutée en fonction du fichier de mise à jour de version, le procédé comprend en outre :
l'affichage d'un traitement de l'opération de mise à jour et d'un résultat de l'opération de mise à jour.

3. Répéteur sans fil, utilisé dans un réseau domestique, comprenant :
une unité de connexion (51) configurée pour établir une connexion sans fil avec un dispositif d'accès sans fil, dans lequel le dispositif d'accès sans fil est relié à un serveur de multidiffusion,
une unité de détection (52) configurée pour détecter en temps réel si un paquet appartenant à un fichier de mise à jour de version est reçu au niveau d'une adresse au protocole IP prédéfinie de multidiffusion, qui est envoyé par le serveur de multidiffusion par l'intermédiaire du dispositif d'accès sans fil,
une unité de réception (53) configurée pour recevoir en temps réel le paquet du fichier de mise à jour de version quand le paquet du fichier de mise à jour de version est détecté, et
une unité de mise à jour (54) configurée pour intégrer le paquet du fichier de mise à jour de version reçu en temps réel dans un fichier de mise à jour de version et
exécuter une opération de mise à jour en fonction du fichier de mise à jour de version,
dans lequel l'unité de connexion (51) comprend :
un module d'établissement (511) configuré pour établir un identificateur d'ensemble de services SSID utilisé pour une mise à jour par multidiffusion, l'identificateur SSID étant identique à un identificateur SSID du dispositif d'accès sans fil, et
un premier module de connexion (512) configuré pour être relié automatiquement au dispositif d'accès sans fil par l'intermédiaire de l'identificateur SSID après que le répéteur sans fil est mis sous tension.

4. Répéteur sans fil selon la revendication 3, comprenant en outre :
une unité d'affichage (55) configurée pour afficher un traitement d'une opération de mise à jour et un résultat de l'opération de mise à jour quand l'unité de mise à jour exécute l'opération de mise à jour en fonction du fichier de mise à jour de version.

5. Système de mise à jour d'un répéteur sans fil, comprenant :
un serveur de multidiffusion (71) configuré pour envoyer cycliquement un paquet appartenant à un fichier de mise à jour de version à une adresse au protocole IP prédéfinie de multidiffusion avec un intervalle de temps préréglé,
au moins un répéteur sans fil (72) configuré pour établir un identificateur d'ensemble de services SSID utilisé pour une mise à jour par multidiffusion, dans lequel l'identificateur SSID est identique à un identificateur SSID appartenant à un dispositif d'accès sans fil (73), pour effectuer une connexion automatique au dispositif d'accès sans fil par l'intermédiaire de l'identificateur SSID après avoir été mis sous tension,
pour détecter en temps réel si les paquets sont reçus au niveau de l'adresse au protocole IP prédéfinie de multidiffusion, et après la détection des paquets, pour recevoir les paquets en temps réel, intégrer les paquets reçus en temps réel dans un fichier de mise à jour de version et exécuter une opération de mise à jour en fonction du fichier de mise à jour de version, et
le dispositif d'accès sans fil (73), qui est relié au serveur de multidiffusion par l'intermédiaire d'un réseau Ethernet ou de manière sans fil, et relié à chaque répéteur sans fil par liaison sans fil.
